# EUROPEAN PATENT APPLICATION

(11) **EP 2 520 598 A2**
(43) Date of publication of application: **07.11.2012**
(21) Application number: 12178828.5
(22) Date of filing: 26.12.2006
(51) Int. Cl.: C08G 18/78, C08G 18/10, C08G 18/40, C09D 5/00, C09D 7/12, C09D 175/04, C09J 11/06, C09J 175/04

(54) **Process for producing allophanate group-containing polyisocyanates, urethane prepolymers, and polyurethane resin compositions**

(30) Priority: 28.12.2005 JP 2005380015
(62) Divisional of application: 06843318.4
(71) Applicant: Mitsui Chemicals, Inc., Tokyo 105-7117 (JP)
(72) Inventor: Sasano, Shigetoshi, Chiba 299-0265 (JP); Oosaki, Takeshi, Chiba 299-0265 (JP); Nishimura, Mitsuhiro, Chiba 290-0045 (JP); Washizu, Hiroyuki, Osaka 592-8501 (JP)
(74) Representative: HOFFMANN EITLE

(57) **Abstract**

Polyurethane resin compositions include a urethane prepolymer with an active hydrogen group and a polyisocyanate, or a urethane prepolymer with an isocyanate group and an active hydrogen compound. The urethane prepolymers having an active hydrogen group or an isocyanate group are obtained by reacting an allophanate group-containing polyisocyanate with a side-chain hydrocarbon group of 5 or more carbon atoms and a bifunctional or polyfunctional active hydrogen compound. Particularly preferably, the allophanate group-containing polyisocyanate is obtained by reacting a C5 or higher carbon_number compound having an alcoholic hydroxyl group and an organic diisocyanate, in the presence of an organic bismuth carboxylate and an organic phosphite triester. The polyurethane resin compositions are suited for use as adhesives for bonding low-polarity resin bases such as polyolefin films.

## Description

### TECHNICAL FIELD

The present invention relates to a high-selectivity process for producing allophanate group-containing polyisocyanates. In more detail, the invention relates to the production of the polyisocyanates substantially free of urethane groups, urethodione groups and isocyanurate groups.

The present invention also relates to urethane prepolymers obtained from an allophanate group-containing polyisocyanate with a side-chain hydrocarbon group of 5 or more carbon atoms and an active hydrogen compound, and relates to polyurethane resin compositions containing the urethane prepolymers.

### BACKGROUND ART

Polyurethane resin adhesives are frequently used for the bonding of plastic films such as polyolefin films and polyester films, and metal foils such as aluminum foils. With the polyolefin films such as polyethylene films and polypropylene films, the polarity of the resin is low and sufficient bond strength is often not obtained with the polyurethane resin adhesives. Further, achieving high bond strength involves surface treatment of the polyolefin films.

To solve the problems described above, Patent Documents 1 to 5 propose adhesives from polyurethane resins having long hydrocarbon chains. However, because these polyurethane resins do not have allophanate groups, the resin viscosity is high and employable solvents are limited to certain solvents such as toluene and xylene.

There are various established methods for the production of polyisocyanates having allophanate groups. The conventional methods, however, have problems such as side reactions where the isocyanates are dimerized or trimerized, and a low yield of the polyisocyanates having allophanate groups. Patent Document 6 addresses this problem, proposing a method of producing allophanate group-containing compounds substantially without dimers or trimers by reacting an urethane compound and an isocyanate compound in the presence of a metal salt of an organic carboxylic acid, and an organic phosphite. Patent Document 7 proposes that a zirconium carboxylate is used to catalyze allophanate formation in the production of allophanate group-containing compounds substantially without dimers or trimers. These production methods reduce the reaction selectivity for allophanate group-containing compounds with increasing number of carbon atoms in the hydrocarbon groups of hydroxyl compounds.
Patent Document 1: JP-A-H06-287532
Patent Document 2: JP-A-H09-125042
Patent Document 3: JP-A-H11-241057
Patent Document 4: JP-A-2002-179757
Patent Document 5: JP-A-2005-68228
Patent Document 6: JP-A-H08-188566
Patent Document 7: JP-A-2002-249535

### DISCLOSURE OF THE INVENTION

### PROBLEMS TO BE SOLVED BY THE INVENTION

The present invention is aimed at solving the problems in the background art. It is therefore an object of the invention to provide a process for producing high carbon number polyisocyanates containing allophanate groups, substantially without the formation of dimers or trimers.

It is another object of the invention to provide polyurethane resin composition suited for use as adhesives for bonding base materials made of low-polarity resins such as polyolefin films.

### MEANS FOR SOLVING THE PROBLEMS

The present inventors studied diligently to solve the above problems. They have then found that an organic bismuth carboxylate and an organic phosphite triester can catalyze allophanate formation to enable selective production of high carbon number polyisocyanates containing allophanate groups, thus completing the invention. The present inventors have also found that a polyurethane resin composition of a urethane prepolymer having an allophanate group and a side chain hydrocarbon group of many carbon atoms shows excellent compatibility and adhesion with respect to low-polarity resins such as polyolefins and gives a cured product that has less swelling and superior long-term adhesion. The present invention has been completed based on the finding.

A process for producing allophanate group-containing polyisocyanates according to the present invention comprises reacting a monol of 5 or more carbon atoms and an organic diisocyanate in the presence of an organic bismuth carboxylate and an organic phosphite triester.

In the process, after the monol and the organic diisocyanate are reacted to give a compound having a urethane group, the compound is preferably subjected to allophanate formation in the presence of an organic bismuth carboxylate and an organic phosphite triester.

The organic diisocyanate is preferably an aliphatic or alicyclic diisocyanate.

A urethane prepolymer according to the present invention is obtained by reacting an aliophanate group-containing polyisocyanate with a side-chain hydrocarbon group of 5 or more carbon atoms and a bifunctional or polyfunctional active hydrogen compound.

The allophanate group-containing polyisocyanate is preferably obtained by reacting a monol having a hydrocarbon group of 5 or more carbon atoms and an organic diisocyanate.

The urethane prepolymer preferably has an active hydrogen group or an isocyanate group.

A polyurethane resin composition according to the present invention comprises the urethane prepolymer having an active hydrogen group, and a polyisocyanate. A polyurethane resin composition according to the present invention comprises the urethane prepolymer having an isocyanate group, and an active hydrogen compound.

The polyurethane resin compositions preferably contains an olefin polyol.

An adhesive, a primer, and an anchor coating agent according to the present invention comprise the polyurethane resin composition.

### ADVANTAGES OF THE INVENTION

According to the present invention, high carbon number polyisocyanates containing allophanate groups are produced easily substantially without causing dimers or trimers. The process of the invention is particularly useful for the production of high carbon number polyisocyanates containing allophanate groups.

The polyurethane resin compositions according to the present invention give a cured product that has less swelling and superior long-term adhesion and are suitably used as adhesives for the bonding of base materials made of low-polarity resins such as polyolefin films.

### BEST MODE FOR CARRYING OUT THE INVENTION

### <Process for producing allophanate group-containing polyisocyanates>

High carbon number polyisocyanates containing allophanate groups may be produced by reacting a high carbon number compound having an alcoholic hydroxyl group and an organic diisocyanate, in the presence of an organic bismuth carboxylate and an organic phosphite triester.

### (Compound having alcoholic hydroxyl group)

The high carbon number compound having an alcoholic hydroxyl group is a hydroxyl-terminated compound that has 5 or more carbon atoms, preferably 5 to 300 carbon atoms and is derived from aliphatic groups, alicyclic groups, aromatic groups or combinations thereof.

Specific examples of the compounds having an alcoholic hydroxyl group include: aliphatic monols such as pentanol, hexanol, heptanol, octanol, nonanol, decanol, isomers of these monols, lauryl alcohol, myristyl alcohol (tetradecanol), pentadecanol, cetyl alcohol (hexadecanol), heptadecanol, stearyl alcohol (octadecanol), nonadecanol, other alkanols (C20-50), oleyl alcohol and polyethylene butylene monol; alicyclic monols such as cyclohexanol and methylcyclohexanol; aromatic aliphatic monols such as benzyl alcohol;
aliphatic diols such as 1,5-pentanediol, 2-methyl-1,5-pentanediol, 3-methyl-1,5-pentanediol, 1,6-hexanediol, 1,8-octanediol, 1,9-nonanediol, 2,2,4-trimethyl-1,3-pentanediol, 2-ethyl-1,3-hexanediol, 2-n-hexadecane-1,2-ethylene glycol, 2-n-eicosane-1,2-ethylene glycol and 2-n-octacosane-1,2-ethylene glycol; alicyclic diols such as cyclohexane-1,4-diol, cyclohexane-1,4-dimethanol and hydrogenated Bisphenol A ; aromatic aliphatic diols such as bis (β-hydroxyethyl)benzene; and
hydroxy group-containing esters such as those formed between the above-described monols and oxycarboxylic acids such as α-oxypropionic acid, oxysuccinic acid, dioxysuccinic acid, ε-oxypropane-1,2,3-tricarboxylic acid, hydroxyacetic acid, α-hydroxybutyric acid, hydroxystearic acid, ricinolic acid, ricinoelaidic acid, ricinostearolic acid, salicylic acid and mandelic acid.

Examples further include polyether monols and polyether polyols obtained by addition reaction of alkylene oxides (e.g., ethylene oxide, propylene oxide) to the alcoholic hydroxyl group-containing compounds described above, methanol, ethanol, propanol (isomers thereof) and butanol (isomers thereof) that are initiators; polyester monols and polyester polyols obtained by addition reaction of lactone compounds (e.g., ε-caprolactone) to the above initiators; and polycarbonate monols and polycarbonate polyols obtained by addition reaction of low-molecular carbonates (e.g., ethylene carbonate, propylene carbonate, dimethyl carbonate, diethyl carbonate, diphenyl carbonate) to the above initiators.

These alcoholic hydroxyl group-containing compounds may be used singly, or two or more kinds may be used in combination.

Of the alcoholic hydroxyl group-containing compounds, the monols having 5 or more carbon atoms are preferred because the advantages of the invention are appreciated more effectively, and in view of easy handling and the viscosity of the obtainable polyisocyanate.

### (Organic diisocyanates)

Examples of the organic diisocyanates include: aromatic diisocyanates such as 2,4-tolylene diisocyanate, 2,6-tolylene diisocyanate, 4,4'-diphenylmethane diisocyanate, 2,4'-diphenylmethane diisocyanate, 2,2'-diphenylmethane diisocyanate, 4,4'-diphenyl ether diisocyanate, 2-nitrodiphenyl-4,4'-diisocyanate, 2,2'-diphenylpropane-4,4'-diisocyanate, 3,3'-dimethyldiphenylmethane-4,4'-diisocyanate, 4,4'-diphenylpropane diisocyanate, m-phenylene diisocyanate, p-phenylene diisocyanate, naphthylene-1,4-diisocyanate, naphthylene-1,5-diisocyanate and 3,3'-dimethoxydiphenyl-4,4'-diisocyanate;
aliphatic diisocyanates such as hexamethylene diisocyanate, tetramethylene diisocyanate, 2-methylpentane-1,5-diisocyanate, 3-methylpentane-1,5-diisocyanate, lysine diisocyanate and trioxyethylene diisocyanate;
aromatic aliphatic diisocyanates such as xylylene-1,4-diisocyanate, xylylene-1,3-diisocyanate and tetramethylxylylene diisocyanate; and
alicyclic diisocyanates such as isophorone diisocyanate, hydrogenated tolylene diisocyanate, hydrogenated xylene diisocyanate, hydrogenated diphenylmethane diisocyanate, hydrogenated tetramethylxylene diisocyanate and norbornene diisocyanate.

These organic diisocyanates may be used singly, or two or more kinds may be used in combination.

Of the diisocyanates, the aliphatic diisocyanates and the alicyclic diisocyanates are preferred, and hexamethylene diisocyanate is particularly preferred in view of weathering resistance of the obtainable polyisocyanate.

### (Organic bismuth carboxylate)

The carboxylic acids that constitute the organic bismuth carboxylates include: monocarboxylic acids such as saturated aliphatic monocarboxylic acids such as acetic acid, propionic acid, butyric acid, caproic acid, octylic acid, lauric acid, myristic acid, palmitic acid, stearic acid and 2-ethylhexanoic acid; saturated monocyclic monocarboxylic acids such as cyclohexanecarboxylic acid and cyclopentanecarboxylic acid; saturated polycyclic monocarboxylic acids such as bicyclo(4.4.0)decane-2-carboxylic acid; unsaturated aliphatic monocarboxylic acids such as naphthenic acid, oleic acid, linolic acid, linolenic acid, soybean oil fatty acid and tall oil fatty acid; aromatic aliphatic monocarboxylic acids such as diphenylacetic acid; and aromatic monocarboxylic acids such as benzoic acid and toluic acid; and
polycarboxylic acids such as phthalic acid, isophthalic acid, terephthalic acid, naphthalenedicarboxylic acids, succinic acid, tartaric acid, oxalic acid, malonic acid, glutaric acid, adipic acid, pimelic acid, suberic acid, glutaconic acid, azelaic acid, sebacic acid, 1,4-cyclohexyldicarboxylic acids, α-hydromuconic acid, β-hydromuconic acid, α-butyl-a-ethylglutaric acid, α,β-diethylsuccinic acid, maleic acid, fumaric acid, trimellitic acid and pyromellitic acid.

The organic bismuth carboxylates may be used singly, or two or more kinds may be used in combination.

Of the organic bismuth carboxylates, the bismuth salts of the monocarboxylic acids of 10 or less carbon atoms are preferred.

### (Organic phosphite triester)

The organic phosphite triester is represented by Formula (1) below:

(R¹O)₃P (1)

In Formula (1), R¹ are each independently an alkyl group of 1 to 20 carbon atoms, or an aryl group optionally substituted with an alkyl group of 1 to 20 carbon atoms, and the alkyl groups may be optionally substituted with a halogen such as chlorine.

Examples of the organic phosphite triesters include: monophosphites such as triethyl phosphite, tributyl phosphite, tris(2-ethylhexyl) phosphite, tridecyl phosphite, trilauryl phosphite, tris(tridecyl) phosphite, tristearyl phosphite, triphenyl phosphite, tris(nonylphenyl) phosphite, tris(2,4-di-t-butylphenyl) phosphite, diphenyldecyl phosphite and diphenyl(tridecyl) phosphite;

di-, tri- or tetraphosphites derived from polyhydric alcohols, such as distearyl-pentaerythritol-diphosphite, di-tridecyl-pentaerythritol-diphosphite, dinonylphenyl-pentaerythritol-diphosphite, tetraphenyl-tetratridecyl-pentaerythritol-tetraphosphite, tetraphenyl-dipropyleneglycol-diphosphite and tripentaerythritol-triphosphite;

diphosphites derived from bisphenol compounds, such as C1-20 di-alkyl-bisphenol A-diphosphites and 4,4'-butylidene-bis(3-methyl-6-t-butylphenyl-di-tridecyl) phosphite; polyphosphites such as hydrogenated bisphenol A phosphite polymers (molecular weight: 2400-3000); and tris(2,3-dichloropropyl) phosphite.

### (Process for producing allophanate group-containing polyisocyanates)

First, the alcoholic hydroxyl group-containing compound and the organic diisocyanate are reacted to give a compound having a urethane group. The reaction conditions are not particularly limited and may be conventional.

When the urethane group-containing compound has an isocyanate group in the molecule, the allophanate formation will take place among the molecules of the urethane group-containing compound under specific conditions. During the reaction, an amount of an isocyanate group-containing compound may be newly added.

In terms of reaction efficiency, it is preferable that the organic diisocyanate is used in large excess over the alcoholic hydroxyl group-containing compound to form the urethane groups, and the allophanate formation is then performed. In the production of the urethane group-containing compound, the equivalent ratio of the organic diisocyanate to the alcoholic hydroxyl group-containing compound (NCO/OH) is preferably in the range of 2 to 100, more preferably 5 to 20. The reaction temperature is preferably from 40 to 100°C, and the reaction time preferably ranges from 0.5 to 10 hours.

The formation of the urethane groups may be performed with known urethane-forming catalysts or organic catalysts. Exemplary catalysts include dibutyltin dilaurate and stannous octoate.

The thus-obtained compound with the urethane group is then reacted with the organic diisocyanate in the presence of the organic bismuth carboxylate (catalyst) and the organic phosphite ester (cocatalyst), producing an allophanate group-containing polyisocyanate.

The use of the organic phosphite ester as cocatalyst enables the reduction of amount of the organic bismuth carboxylate as compared with the non-use of the cocatalyst. The amount of the organic bismuth carboxylate is preferably 0.0005 to 1 wt%, more preferably 0.001 to 0.1 wt% relative to the urethane group-containing compound. If the amount of the organic bismuth carboxylate is below the lower limit, the reaction is not substantially accelerated and takes a long time. If the organic bismuth carboxylate is used in amounts exceeding the upper limit, controlling the reaction is difficult and the use of the allophanate group-containing polyisocyanate as a curing agent encounters a short pot life.

The amount of the organic phosphite ester is preferably 0.005 to 1 wt%, more preferably 0.01 to 0.5 wt% relative to the urethane group-containing compound. If the amount of the organic phosphite ester is below the lower limit, the compound will not function sufficiently as the cocatalyst. The use of the organic phosphite ester in amounts exceeding the upper limit can adversely affect physical properties of final products from the allophanate group-containing polyisocyanate.

The allophanate formation is generally performed at a temperature of 0 to 160°C, preferably 20 to 120°C, for 0.5 to 20 hours. The progress of the reaction may be followed by measuring the content of the isocyanate or urethane groups or by measuring the viscosity of the final product. When the urethane groups are completely converted into the allophanate groups, an allophanate-formation terminator such as phosphoric acid, monochloroacetic acid, benzoyl chloride, dodecylbenzenesulfonic acid or paratoluenesulfonic acid is added into the reaction liquid, whereby the allophanate-forming catalysts are deactivated and the reaction is terminated. The reaction may be alternatively terminated by adding such a substance as a chelate resin or an ion exchange resin capable of adsorbing the catalyst or cocatalyst. If the conversion of the urethane groups into the allophanate groups is insufficient, the unreacted urethane group-containing compound can precipitate in the final product. It is not recommended that the reaction is continued without the addition of the terminator because dimers or trimers of isocyanate may result.

An organic solvent may be optionally used in the above reaction. Examples of the organic solvents include aliphatic hydrocarbon organic solvents such as n-hexane and octane; alicyclic hydrocarbon organic solvents such as cyclohexane and methylcyclohexane; ketone organic solvents such as acetone, methyl ethyl ketone, methyl isobutyl ketone and cyclohexanone; ester organic solvents such as methyl acetate, ethyl acetate, butyl acetate and isobutyl acetate; glycol ether ester organic solvents such as ethylene glycol ethyl ether acetate, propylene glycol methyl ether acetate, 3-methyl-3-methoxybutyl acetate and ethyl-3-ethoxypropionate; ether organic solvents such as diethyl ether, tetrahydrofuran and dioxane; halogenated aliphatic hydrocarbon organic solvents such as methyl chloride, methylene chloride, chloroform, carbon tetrachloride, methyl bromide, methylene iodide and dichloroethane; and polar aprotic organic solvents such as N-methylpyrrolidone, dimethylformamide, dimethylacetamide, dimethylsulfoxide and hexamethylphosphorylamide. These organic solvents may be used singly, or two or more kinds may be used in combination.

The final product from the allophanate formation often contains residual free organic diisocyanates. Because such free organic diisocyanates cause an odor or over-time turbidity, they are preferably removed to 1 wt% or less. Conventional methods such as distillation, reprecipitation and extraction may be used to remove the free organic diisocyanates. Of these methods, distillation is preferable because it removes the organic diisocyanates without solvents, and thin-film distillation is particularly preferable. Referring to the thin-film distillation conditions, the pressure is preferably not more than 0.2 kPa and the temperature is preferably 100 to 200°C; particularly preferably, the pressure is not more than 0.1 kPa and the temperature is 120 to 180°C.

In the production process described above, the allophanate formation preferentially and stably proceeds at a constant rate, and is therefore easily controllable. The reaction will be terminated when the allophanate formation completes, giving a final product that contains an allophanate group-containing polyisocyanate substantially free of dimers or trimers. As used herein, the words "substantially free of dimers or trimers" mean that the dimers or trimers are absent or detected at a trace level by IR analysis or NMR analysis, namely, the content thereof is below the detection limit.

The allophanate group-containing polyisocyanate obtained by the above process possesses hydrocarbon groups of 5 or more carbon atoms, allophanate groups and isocyanate groups. In view of reactivity with the compound having an active hydrogen group, the isocyanate group content is preferably 3 to 20 wt% based on 100 wt% of the solid content of the polyisocyanate. The hydrocarbon groups of 5 or more carbon atoms are preferably present as side chains, in which case the polyisocyanate shows good compatibility with low-polarity resins such as polyolefins. The allophanate group-containing polyisocyanate is substantially uncolored, and has a low viscosity and superior handleability.

The allophanate group-containing polyisocyanate may be used as a curing agent for polyurethane resin compositions. For example, a two-pack resin composition may be prepared which is a combination of a solution containing the polyisocyanate (curing agent) and a solution of an active hydrogen compound (base resin). By mixing the two solutions, reaction takes place between the isocyanate group in the allophanate group-containing polyisocyanate and the active hydrogen compound to form urethane bonds, resulting in a polyurethane resin composition.

Examples of the active hydrogen compounds include polyols having two or more hydroxyl groups in the molecule. Conventional polyols known in the field of polyurethane resins may be used in the invention, with examples including alkyd polyols, acryl polyols, acrylated alkyd polyols, polyether polyols, polyester polyols, polycarbonate polyols, polybutadiene polyol oligomers, fluorine-containing polyols and silicon-containing polyols.

The quantitative ratio between the allophanate group-containing polyisocyanate and the active hydrogen compound may be determined appropriately depending on the kinds of the compositions. For example, the ratio may be 1 mol of the isocyanate group in the allophanate group-containing polyisocyanate to 0.2 to 5 mol of the active hydrogen in the active hydrogen compound.

The polyurethane resin compositions may contain various additives such as curing catalysts such as dibutyltin laurate and stannous octoate, fillers such as calcium carbonate and carbon black, leveling agents, anti-foaming agents and stabilizers.

The polyurethane resin compositions may be suitably used in paints, adhesives, binders, printing inks, magnetic recording media, coating agents, sealing agents, elastomers, encapsulating agents, synthetic leathers, building materials and various shaping materials. They also may form foams, foam fillers and microcapsules. In particular, the compositions are suited for use as curing agents for high-solid paints and turpentine paints.

The polyurethane resin compositions have good compatibility with poor solvents. Because of containing the hydrocarbon groups of many carbon atoms, the compositions show improved adhesion with base materials such as olefin films.

### <Urethane prepolymers and polyurethane resin compositions>

The urethane prepolymers according to the present invention may be obtained by reacting an allophanate group-containing polyisocyanate with a side-chain hydrocarbon group of 5 or more carbon atoms and a bifunctional or polyfunctional active hydrogen compound. Of the urethane prepolymers, those having an active hydrogen group or an isocyanate group are preferable.

The allophanate group-containing polyisocyanate with a side-chain hydrocarbon group of 5 or more carbon atoms may be produced by subjecting the alcoholic hydroxyl group-containing compound having a C5 or higher hydrocarbon group, to the above-described production process for the allophanate group-containing polyisocyanates or to the process described in JP-A-H08-188566. Of the production methods, the production process of the present invention is preferable in that the process has high controllability and can produce the allophanate group-containing polyisocyanate substantially free of dimers or trimers.

Examples of the active hydrogen compounds include polyols having two or more hydroxyl groups in the molecule, and polyamines having two or more amino groups in the molecule. The polyols include diols such as ethylene glycol, propanediol, 1, 4-butylene glycol, 1, 3-butylene glycol, 1, 2-butylene glycol, 1,5-pentanediol, 2-methyl-1,5-pentanediol, 3-methyl-1,5-pentanediol, 1,6-hexanediol, neopentyl glycol, alkane (C7-22) diols, diethylene glycol, triethylene glycol, dipropylene glycol, cyclohexane dimethanol, alkane-1,2-diols (C17-20), 1,4-dihydroxy-2-butene, 2,6-dimethyl-1-octene-3,8-diol, bisphenol A, hydrogenated bisphenol A and bis(β-hydroxyethyl)benzene; triols such as glycerol, 2-methyl-2-hydroxymethyl-1,3-propanediol, 2,4-dihydroxy-3-hydroxymethylpentane, 1,2,6-hexanetriol, 1,1,1-tris(hydroxymethyl)propane, 2,2-bis(hydroxymethyl)-3-butanol and other aliphatic triols (C8-24); and polyols known in the field of polyurethane resins such as alkyd polyol, acryl polyol, acrylated alkyd polyol, polyether polyol, polyester polyol, polycarbonate polyol, polybutadiene polyol oligomer, fluorine-containing polyol and silicon-containing polyol. The polyamines include diamines such as diaminotoluene, bis-(4-aminophenyl)methane, bis-(4-amino-3-chlorophenyl)methane, di-(aminomethyl)benzene, di-(2-amino-2-propyl)benzene, 1-amino-3-aminomethyl-3,5,5-trymethylcyclohexane, bis-(4-aminocyclohexyl)methane, diaminocyclohexane, di-(aminomethyl)cyclohexane, ethylenediamine, propylenediamine, hexamethylenediamine, hydrazine, 1,2-diaminoethane, 1,2-diaminopropane, 1,3-diaminopentane and 1,6-diaminohexane; and polyamines known in the field of polyurethane resins such as polyamidopolyamine.

In the production of the urethane prepolymer, in particular in the production of the urethane prepolymer having an active hydrogen group or an isocyanate group, the quantitative ratio between the allophanate group-containing polyisocyanate and the active hydrogen compound may be such that the ratio R (= isocyanate group/active hydrogen group) is other than 1.0 and is preferably 0.1 ≤ R < 1.0 or is preferably 1.0 < R ≤ 10.0, and is more preferably 0.2 ≤ R ≤ 0.9 or is more preferably 1.2 ≤ R ≤ 5.0, wherein R is the ratio of the isocyanate groups in the allophanate group-containing polyisocyanate to the active hydrogen groups in the active hydrogen compound. When the ratio R is less than 1.0, a urethane prepolymer with the active hydrogen groups result. When the ratio R exceeds 1.0, a urethane prepolymer with the isocyanate groups result.

In the production of the urethane prepolymer, the reaction temperature is preferably 40 to 100°C and the reaction time is preferably 0.5 to 10 hours. Known urethane-forming catalysts or organic catalysts may be used. Exemplary catalysts include dibutyltin dilaurate and stannous octoate.

The urethane prepolymer obtained as described above has the allophanate groups, and the active hydrogen groups or isocyanate groups, and also has the side-chain hydrocarbon groups of 5 or more carbon atoms. The urethane prepolymer with the active hydrogen groups in combination with a polyisocyanate may form a polyurethane resin composition. The urethane prepolymer with the isocyanate groups in combination with an active hydrogen compound may form a polyurethane resin composition. These compositions find various applications including adhesives, primers and anchor coating agents. The fact that the urethane prepolymer has the side-chain hydrocarbon groups of 5 or more carbon atoms provides the following particular advantages: Cured products from the compositions have less swelling and superior long-term adhesion. Further, the compositions are useful as adhesives, primers and anchor coating agents for low-polarity resin bases such as polyolefin films. Furthermore, the compositions show high bonding strength to untreated surfaces of such bases. On the other hand, because of containing the allophanate groups, the resin compositions have a relatively low viscosity and are therefore handled easily in the above applications. The polyisocyanates used herein may be known polyisocyanates used in general polyurethane resins. Examples thereof include the organic diisocyanates mentioned in the production of the allophanate group-containing polyisocyanates; derivatives thereof such as dimers, trimers, biurets and allophanates from the organic diisocyanates; and adducts of these compounds with the active hydrogen compounds described in the production of the urethane prepolymers. Examples of the active hydrogen compounds include those described in the production of the urethane prepolymers.

The molar ratio between the urethane prepolymer with the active hydrogen groups and the polyisocyanate may be preferably, for example, 0.1 to 3.0 mol, more preferably 0.5 to 2.0 mol of the active hydrogen groups in the urethane prepolymer to 1 mol of the isocyanate groups in the polyisocyanate.

The molar ratio between the urethane prepolymer with the isocyanate groups and the active hydrogen compound may be preferably, for example, 0.1 to 3.0 mol, more preferably 0.5 to 2.0 mol of the isocyanate groups in the urethane prepolymer to 1 mol of the active hydrogen groups in the active hydrogen compound.

The polyurethane resin compositions preferably contain an olefin polyol to achieve higher adhesion to an untreated surface of the base material. For example, polyols such as polybutadiene polyols, hydrogenated polybutadiene polyols, isoprene polyols and hydrogenated isoprene polyols are preferably added to or reacted with the compositions. Such olefin polyols may be used singly or in combination of two or more kinds. The amount of the olefin polyols is preferably 2 to 98 wt%, more preferably 5 to 50 wt% relative to the urethane prepolymer. The above olefin polyols have excellent compatibility with the urethane prepolymer, and therefore the addition or reaction of the olefin polyols with the polyurethane resin compositions does not cause phase separation.

The polyurethane resin compositions may contain known urethane-forming catalysts or organic catalysts. Exemplary catalysts include dibutyltin dilaurate and stannous octoate.

The polyurethane resin compositions may contain known additives as required. Such additives are for example fillers, softeners, anti-aging agents, anti-oxidants, ultraviolet absorbents, hydrolysis inhibitors, stabilizers, silane-coupling agents, leveling agents, thixotropic agents, anti-foaming agents, plasticizers, inorganic fillers, coloring agents such as pigments, and tackifier resins.

The polyurethane resin compositions preferably have a curing temperature of 30 to 100°C and a curing time of 0.5 hour to 1 week.

### [Examples]

The present invention will be described by Examples without limiting the scope of the invention. In Examples and Comparative Examples, % and parts refer to wt% and parts by weight unless otherwise mentioned.

### [Example 1]

### (Production of allophanate group-containing polyisocyanate)

A 1-liter reactor equipped with a stirrer, a thermometer, a condenser and a nitrogen gas inlet tube was charged with 930 g of 1, 6-hexamethylene diisocyanate (HDI), 70 g of decanol and 0.5 g of tris (tridecyl) phosphite in a nitrogen atmosphere. Urethane formation was then performed at 80°C for 2 hours. To the reaction liquid, 0.05 g of allophanate-forming catalyst bismuth octylate was added, and the reaction was performed at 100°C. Thereafter, the reaction was terminated by addition of 0.03 g of benzoyl chloride. The reaction time was 7 hours.

900 g of the reaction liquid was distilled on a thin-film distillation apparatus (degree of vacuum: 0.05 kPa, temperature: 140°C), and thereby unreacted HDI was removed. A light yellow compound weighing 210 g resulted. The compound was analyzed for the isocyanate group content by a testing method for the isocyanate group content described in JIS K 7301, resulting in 16.0%. The viscosity at 25°C was measured to be 100 mPa·s with a BL viscometer (DVL-B) manufactured by Tokyo Keiki Kogyo Co., Ltd. The free HDI content was 0.5%, and the color number was 30 (APHA).

The presence of the allophanate groups was confirmed by FT-IR and ¹H-NMR for the polyisocyanate. The analysis showed that there were no urethane groups or isocyanurate groups.

Table 1 sets forth the materials used, allophanate-formation conditions, and properties of the product.

### [Examples 2 to 6]

### (Production of allophanate group-containing polyisocyanates)

Polyisocyanates were produced in the same manner as in Example 1, except that the materials used and allophanate-formation conditions were altered as shown in Table 1. The results are set forth in Table 1.

### [Comparative Example 1]

### (Production of allophanate group-containing polyisocyanate)

A polyisocyanate was produced in the same manner as in Example 1, except that 0.05 g of zirconium 2-ethylhexanoate was used as the allophanate-forming catalyst, and the reaction time was changed to 3 hours. The results are set forth in Table 1. A compound having isocyanurate groups occurred at 4%.

### [Comparative Example 2]

### (Production of polyisocyanate)

Production of a polyisocyanate was attempted in the same manner as in Example 1, except that tris(tridecyl) phosphite was not used. However, the allophanate formation did not take place.

### [Comparative Example 3]

A polyisocyanate was produced in the same manner as in Example 1, except that the amount of 1,6-hexamethylene diisocyanate was changed from 970 g to 913 g, decanol was replaced by 87 g of tridecanol, and 0.05 g of lead 2-ethylhexanoate was used as the allophanate-forming catalyst. The results are set forth in Table 1. The reaction rate was very low, and the allophanate formation took a long time.

**[Table 1]**

| | | Ex. 1 | Ex. 2 | Ex. 3 | Ex.4 | Ex. 5 | Ex. 6 | Comp. Ex. 1 | Comp. Ex. 2 | Comp. Ex. 3 |
|---|---|---|---|---|---|---|---|---|---|---|
| Raw materials | NCO (g) | HDI 930 | HDI 913 | HDI 897 | HDI 886 | HDI 850 | H₆XDI 939 | HDI 930 | HDI 930 | HDI 913 |
| | C10 alcohol (g) | 70 | - | - | - | - | 61 | 70 | 70 | - |
| | C13 alcohol (g) | - | 87 | - | - | - | - | - | - | 87 |
| | C16 alcohol (g) | - | - | 103 | - | - | - | - | - | - |
| | C18 alcohol (g) | - | - | - | 114 | - | - | - | - | - |
| | C25 alcohol (g) | - | - | - | - | 150 | - | - | - | - |
| Catalysts | Bi octylate (g) | 0.05 | 0.05 | 0.05 | 0.05 | 0.05 | 0.05 | - | 0.05 | - |
| | Zr 2-ethylhexanoate (g) | - | - | - | - | - | - | 0.05 | - | - |
| | Pb 2-ethylhexanoate (g) | - | - | - | - | - | - | - | - | 0.05 |
| Cocatalysts | Tris(tridodecyl) phosphite (g) | 0.5 | 0.5 | 0.5 | 0.5 | 0.5 | 0.5 | 0.5 | - | 0.5 |
| Reaction conditions | Temperature (°C) | 100 | 100 | 100 | 100 | 100 | 100 | 100 | 100 | 100 |
| | Time (hr) | 7 | 9 | 14 | 7 | 5 | 15 | 3 | * | 21 |
| Product properties | NCO content (%) | 16.0 | 14.6 | 13.8 | 13.3 | 11.4 | 12.0 | 16.1 | - | 18.2 |
| | Viscosity (mPa·s) | 100 | 100 | 110 | 130 | Paste | 1430 | 120 | - | 150 |
| | Free NCO (%) | 0.5 | 0.4 | 0.5 | 0.4 | 0.6 | 0.6 | 0.5 | - | 0.5 |
| | Color number (APHA) | 30 | 40 | 30 | 20 | - | 30 | 30 | - | 30 |
| IR and NMR results | Allophanate groups (%) | 100 | 100 | 100 | 100 | 100 | 100 | 96 | - | 71 |
| | Urethane groups (%) | 0 | 0 | 0 | 0 | 0 | 0 | 0 | - | 29 |
| | Isocyanurate groups (%) | 0 | 0 | 0 | 0 | 0 | 0 | 4 | - | 0 |

| | | | | | | | | | | |
|---|---|---|---|---|---|---|---|---|---|---|
| HDI: 1,6-hexamethylene diisocyanate, H₆XDI: 1,3-diisocyanatomethylcyclohexane ***:** Reaction did not take place. | | | | | | | | | | |

### [Synthetic Example 1]

### (Production of allophanate group-containing polyisocyanates)

A 1-liter four-necked flask equipped with a stirrer, a thermometer, a condenser and a nitrogen gas inlet tube was charged with the organic diisocyanate and monol shown in Table 2 in the amounts shown in Table 2, and further with 0.5 g of tris(tridecyl) phosphite in a nitrogen atmosphere. Urethane formation was then performed at the temperature shown in Table 2 for 2 hours. To the reaction liquid, 0.05 g of allophanate-forming catalyst bismuth octylate (Bi: 19.4%) was added, and the reaction was performed at 100°C. When the conversion of the urethane groups into the allophanate groups substantially completed, the reaction was terminated by addition of 0.03 g of benzoyl chloride. The reaction time is shown in Table 2.

The reaction liquid obtained was distilled on a thin-film distillation apparatus (degree of vacuum: 0.05 kPa, temperature: 150°C), and thereby unreacted organic diisocyanate and unreacted monol were removed. Allophanate group-containing polyisocyanates (A1) to (A5) and (a1) were thus prepared. Properties of the polyisocyanates are shown in Table 2. The isocyanate group content was measured by a testing method for the isocyanate group content described in JIS K 7301. The viscosity was measured with a BL viscometer (DVL-B) manufactured by Tokyo Keiki Kogyo Co., Ltd.

**[Table 2]**

| Synthetic Example 1 | Polyisocyanate | A1 | A2 | A3 | A4 | A5 | a1 |
|---|---|---|---|---|---|---|---|
| | Organic diisocyanate (g) | HDI 860 | HDI 790 | HDI 760 | HDI 410 | H₆XDI 880 | HDI 970 |
| Raw materials | Monol | KALCOL 8098 | UNILIN 350 | UNILIN 425 | Clayton liquid polymer L1203 | KALCOL 8098 | Isobutanol |
| | Number of carbon atoms in hydrocarbon group (g) | 18 | 25 | 30 | 260 | 18 | 4 |
| | | 140 | 210 | 240 | 590 | 120 | 30 |
| Urethane formation | Reaction temperature (°C) | 80 | 90 | 95 | 80 | 80 | 80 |
| Allophanate formation | Reaction temperature (°C) | 100 | 100 | 100 | 100 | 100 | 100 |
| | Reaction time (hr) | About 7 | About 5 | About 5 | About 160 | About 15 | About 12 |
| Product properties | NCO content (%) | 13.3 | 10.2 | 8.6 | 3.0 | 12.0 | 19.4 |
| | Viscosity (mPa·s) | 130 | Paste | Solid | 38000 | 1400 | 120 |

| | | | | | | | |
|---|---|---|---|---|---|---|---|
| HDI: 1,6-hexamethylene diisocyanate H₆XDI: 1,3-diisocyanatomethylcyclohexane KALCOL 8098: stearyl alcohol, hydroxyl value: about 207, melting point: about 60°C, manufactured by Kao Corporation. UNILIN 350: linear alcohol, hydroxyl value: about 129, melting point: about 78°C, manufactured by Baker Petrolite. UNILIN 425: linear alcohol, hydroxyl value: about 105, melting point: about 91°C, manufactured by Baker Petrolite. Clayton liquid polymer L1203: polyethylene butylene monol, hydroxyl equivalent: 3600, manufactured by Clayton Polymer Japan Co., Ltd. | | | | | | | |

### [Synthetic Example 2]

A 1-liter four-necked flask equipped with a stirrer, a thermometer, a condenser and a nitrogen gas inlet tube was charged with the amounts shown in Table 3 of polyoxypropylene glycol (Diol-1000, molecular weight: 1000, manufactured by Mitsui Takeda Chemicals, Inc.), dipropylene glycol and the polyisocyanate shown in Table 3. Urethane formation was then performed for 1 hour under a stream of nitrogen at reaction temperatures adjusted to the range of 60 to 70°C.

To the reaction liquid, 0.06 g of tin octylate was added, and the urethane formation was performed for another 4 hours at reaction temperatures adjusted to the range of 70 to 80°C. Subsequently, the amount shown in Table 3 of 1,4-butylene glycol and 0.12 g of tin octylate were added. The reaction was continued until no peaks assigned to the isocyanate groups were observed in the FT-IR spectra. The solvent shown in Table 3 was then added. Thus, solutions of polyether polyurethane polyols (P-E1) to (P-E4), (P-e1) and (P-e2) were prepared (solid content: 60 wt%).

**[Table 3]**

| Synthetic Example 2 | Polyether polyurethane polyol | P-E1 | P-E2 | P-E3 | P-E4 | P-e1 | P-e2 |
|---|---|---|---|---|---|---|---|
| Glycols | Diol-1000 (g) | 314 | 276 | 227 | 219 | 277 | 381 |
| | Dipropylene glycol (g) | 36 | 32 | 26 | 25 | 32 | 44 |
| Polyisocyanates | A1 (g) | 147 | - | 331 | - | - | - |
| | A3 (g) | - | 200 | - | - | - | - |
| | A5 (g) | - | - | - | 340 | - | - |
| | a1 (g) | - | - | - | - | 271 | - |
| | TDI | 81 | 72 | - | - | - | 148 |
| 1,4-butylene glycol (g) | | 22 | 20 | 16 | 16 | 20 | 27 |
| solvent (g) | | Ethyl acetate 400 | Toluene 400 | Ethyl acetate 400 | Ethyl acetate 400 | Ethyl acetate 400 | Ethyl acetate 400 |
| Presence or absence of allophanate groups | | Present | Present | Present | Present | Present | Absent |
| Number of carbon atoms in side-chain hydrocarbon group | | 18 | 30 | 18 | 18 | 4 | No side chains |

| | | | | | | | |
|---|---|---|---|---|---|---|---|
| Diol-1000: polyoxypropylene glycol, molecular weight: 1000, manufactured by Mitsui Takeda Chemicals, Inc. TDI: tolylene diisocyanate (2,4-isomer/2,6-isomer = 80/20) | | | | | | | |

### [Synthetic Example 3]

A 1-liter four-necked flask equipped with a stirrer, a thermometer, a condenser and a nitrogen gas inlet tube was charged with 530 g of isophthalic acid, 129 g of ethylene glycol and 302 g of neopentyl glycol. Esterification was then performed for 6 hours under a stream of nitrogen at reaction temperatures adjusted to the range of 180 to 220°C. A predetermined amount of water was evaporated, and 215 g of sebacic acid was added. The esterification was performed for another 7 hours at reaction temperatures adjusted to the range of 180 to 220°C. A polyester polyol (P-s1) having a hydroxyl value of 45 resulted.

### [Synthetic Example 4]

A 1-liter four-necked flask equipped with a stirrer, a thermometer, a condenser and a nitrogen gas inlet tube was charged with the polyol and polyisocyanate shown in Table 4 in the amounts shown in Table 4, and further with 125 g of toluene. Urethane formation was then performed for 1 hour at 80°C.

To the reaction liquid, 0. 01 g of tin octylate was added. The reaction was continued at 80°C until no peaks assigned to the isocyanate groups were observed in the FT-IR spectra. Thereafter, 375 g of toluene was added. Thus, solutions of polyurethane polyols (P-U1) to (P-U6) and (P-u1) were prepared (solid content: 50 wt%).

**[Table 4]**

| Synthetic Example 4 | Polyurethane polyol | P-U1 | P-U2 | F-U3 | P-U4 | P-U5 | P-U6 | P-u1 |
|---|---|---|---|---|---|---|---|---|
| Polyols | P-s1 (g) | 416 | 415 | 423 | 280 | - | - | 439 |
| | PD-9 (g) | - | - | - | - | 133 | 120 | - |
| Polyisocyanates | A1 (g) | 84 | - | - | - | 367 | - | - |
| | A2 (g) | - | 85 | - | - | - | 380 | - |
| | A3 (g) | - | - | 77 | - | - | - | - |
| | A4 (g) | - | - | - | 220 | - | - | - |
| | a1 (g) | - | - | - | - | - | - | 61 |
| Solvent | Toluene (g) | 125 | 125 | 125 | 125 | 125 | 125 | 125 |
| | | 375 | 375 | 375 | 375 | 375 | 375 | 375 |
| Hydroxyl value | | 3.7 | 5.6 | 7.6 | 3.8 | 28.0 | 25.0 | 7.9 |
| Presence or absence of allophanate groups | | Present | Present | Present | Present | Present | Present | Present |
| Number of carbon atoms in side-chain hydrocarbon group | | 18 | 25 | 30 | 260 | 18 | 25 | 4 |

| | | | | | | | | |
|---|---|---|---|---|---|---|---|---|
| PD-9: 2,4-diethylpentanediol (KYOWA DIOL PD-9, manufactured by KYOWA HAKKO KOGYO CO., LTD.) | | | | | | | | |

### [Example 7 and Comparative Example 4]

100 parts of each of the polyether polyurethane polyols (base resins) from Synthetic Example 2 was mixed with 30 parts of a polyisocyanate curing agent (TAKENATE A-5, manufactured by Mitsui Takeda Chemical s, Inc.) that was a mixture of dimethyl methane diisocyanate and tolylene diisocyanate. Polyurethane-based adhesives were thus prepared.

Each adhesive was applied to a nylon film (15 µm thick) in an amount of 3.5 g (solid)/m² with a bar coater at room temperature. The solvent was evaporated. An unoriented polyethylene film (130 µm thick, corona treated on one side) was laminated to the nylon film through contact between the adhesive-coated surface and the corona-treated surface. The adhesive was cured at 40°C for 3 days. Two-layer composite films were thus prepared. The composite films were tested for adhesion and content resistance by the following methods.

### (1) Adhesion test

A test piece 150 mm in length and 15 mm in width was cut out from the composite film. The test piece was torn in the middle into a T shape, and the bonding strength between the layers was tested on an Instron tensile tester at a peeling rate of 300 mm/min. The results are shown in Table 5.

### (2) Content resistance test

The composite film was heat sealed (end sealed) to give a pouch 170 mm x 65 mm. The pouch was filled with a strongly alkaline detergent (MAGICLEAN, manufactured by Kao Corporation.). The filled pouch was allowed to stand at 50°C for 1 month, and the appearance after the storage was observed. The bonding strength of the pouch was tested after the storage in the same manner as the above adhesion test. The results are shown in Table 5.

**[Table 5]**

| | Base resin | | | Adhesion test | Content resistance test | |
|---|---|---|---|---|---|---|
| | Type | Allophanate groups | Number of carbon atoms in side-chain hydrocarbon group | T-shape peeling strength (N/15 mm) | Appearance | T-shaped peeling strength (N/15 mm) |
| Ex. 7 | P-E1 | Present | 18 | 5.3 | Normal | 2.5 |
| | P-E2 | Present | 30 | 9.8 | Normal | 5.0 |
| | P-E3 | Present | 18 | 4.5 | Normal | 2.7 |
| | P-E4 | Present | 18 | 5.5 | Normal | 3.4 |
| Comp. Ex. 4 | P-c1 | Present | 4 | 2.8 | Lifting | 0.5 |
| | P-c2 | Absent | No side chains | 10.0 | Lifting | 0.2 |

| | | | | | | |
|---|---|---|---|---|---|---|
| Curing agent: Mixture of dimethyl methane diisocyanate and tolylene diisocyanate | | | | | | |

### [Example 8 and Comparative Example 5]

Each of the polyurethane polyols (base resins) from Synthetic Example 4 and a hydrogenated polybutadiene polyol (base resin) (Polytail H, hydroxyl value: 48, manufactured by Mitsubishi Chemical Corporation) in the amounts shown in Table 6 were mixed with a curing agent HDI trimer (TAKENATE D-177N, manufactured by Mitsui Takeda Chemicals, Inc.) in an equivalent ratio NCO/OH of 1.2. The blend was diluted with toluene to a solid concentration of 25%. Polyurethane-based adhesives were thus prepared.

Each adhesive was allowed to stand at room temperature for 1 hour, and the appearance was visually observed to check phase separation. The results are shown in Table 6.

Separately, the adhesive was applied to an aluminum foil (40 µm thick) in an amount of 3.5 g (solid) /m² with a bar coater at room temperature. The solvent was evaporated. The adhesive-coated aluminum foil was heated in an oven at 150°C for 3 minutes, and was removed from the oven. An unoriented polyethylene film (130 µm thick, corona treated on one side) was laminated to the aluminum foil through contact between the adhesive-coated surface and the corona-treated surface or corona-untreated surface, thereby producing a two-layer composite film. The adhesive was cured at 60°C for 5 days. The thus-prepared composite films were subjected to the adhesion test in the same manner as in Example 7. The results are shown in Table 6.

**[Table 6]**

| | Base resins | | | | Curing agent | Adhesion test | | Phase separation |
|---|---|---|---|---|---|---|---|---|
| | Polyol | | | Polytail H | D-177N | T-shaped peeling strength (N/15 mm) | | |
| | Type (parts) | Allophanate groups | Number of carbon atoms in side-chain hydrocarbon group | (parts) | (parts) | Corona treated surface | Corona untreated surface | |
| Ex. 8 | P-E1 (125) | Present | 18 | 25 | 14 | 5.7 | 6.3 | No |
| | P-E2 (125) | Present | 30 | 25 | 13 | 6.4 | 3.1 | No |
| | P-E3 (125) | Present | 18 | 25 | 11 | 7.0 | 5.4 | No |
| | P-U1 (150) | Present | 18 | 25 | 8 | 4.9 | 4.8 | No |
| | P-U2 (150) | Present | 25 | 25 | 9 | 4.0 | 4.0 | No |
| | P-U2 (180) | Present | 25 | 10 | 7 | 4.3 | 4.5 | No |
| | P-U3 (150) | Present | 30 | 25 | 10 | 4.9 | 7.1 | No |
| | P-U3 (180) | Present | 30 | 10 | 8 | 5.0 | 6.0 | No |
| | P-U4 (150) | Present | 260 | 25 | 8 | 2.4 | 2.3 | No |
| | P-U5 (150) | Present | 18 | 25 | 24 | 2.8 | 2.5 | No |
| | P-U6 (150) | Present | 25 | 25 | 22 | 3.4 | 3.4 | No |
| Comp. Ex. 5 | P-e2 (125) | Absent | No side chains | 25 | 15 | 7.4 | 6.3 | Yes |
| | P-s1 (100) | Absent | No side chains | 0 | 20 | 3.8 | 0.4 | No |
| | P-s1 (75) | Absent | No side chains | 25 | 20 | 3.4 | 4.1 | Yes |
| | P-u1 (150) | Present | 4 | 25 | 8 | 4.5 | 4.4 | Yes |

## Claims

1. A urethane prepolymer obtained by reacting an allophanate group-containing polyisocyanate with a side-chain hydrocarbon group of 5 or more carbon atoms and a bifunctional or polyfunctional active hydrogen compound.

2. The urethane prepolymer according to claim 1, wherein the allophanate group-containing polyisocyanate is obtained by reacting a monol having a hydrocarbon group of 5 or more carbon atoms and an organic diisocyanate.

3. The urethane prepolymer according to claim 1 or 2, which has an active hydrogen group.

4. The urethane prepolymer according to claim 1 or 2, which has an isocyanate group.

5. A polyurethane resin composition comprising the urethane prepolymer with an active hydrogen group described in claim 3, and a polyisocyanate.

6. A polyurethane resin composition comprising the urethane prepolymer with an isocyanate group described in claim 4, and an active hydrogen compound.

7. The polyurethane resin composition according to claim 5 or 6, which further contains an olefin polyol.

8. An adhesive comprising the polyurethane resin composition described in any one of claims 5 to 7.

9. A primer comprising the polyurethane resin composition described in any one of claims 5 to 7.

10. An anchor coating agent comprising the polyurethane resin composition described in any one of claims 5 to 7.
